# EUROPEAN PATENT APPLICATION

(11) **EP 4 806 590 A1**
(43) Date of publication of application: **16.09.2026**
(21) Application number: 25163708.8
(22) Date of filing: 14.03.2025
(51) Int. Cl.: B25B 21/02, B23D 59/00, B25F 5/00

(54) **METHOD FOR RELEASING A LOCKING CONDITION OR FOR PREVENTING A MALFUNCTION OF A MOBILE MACHINE TOOL**

(71) Applicant: Hilti Aktiengesellschaft, 9494 Schaan (LI)
(72) Inventor: Bralla, Dario, 9470 Buchs (CH)
(74) Representative: Hilti Aktiengesellschaft Corporate Intellectual Property

(57) **Abstract**

The present invention relates to a method (M10) for detecting and releasing a locking condition of a tool mechanism (114) of a mobile machine tool (100) in a tooling process or for preventing a malfunction of the mobile machine tool (100), the tool mechanism (114) having a tool (108), a socket (107) and an electric motor (102) for driving the tool (108); the method (M10) comprising: estimating (S11) a socket condition based on an operating parameter of the mobile machine tool (100); detecting (S12) if a locking condition of the socket (107) is present or if a socket inconformity condition for the mobile machine tool (100) is fulfilled based on the estimated socket condition; and if the locking condition is detected, for unlocking the socket (107), reversing (S13A) a direction of rotation of the electric motor (102) or follow a position trajectory according to a release criterion, or, if the socket inconformity condition is detected, stopping (S13B) the electric motor (102) for preventing the malfunction of the mobile machine tool (100).

## Description

### FIELD OF THE INVENTION

The present invention relates to a method for detecting and releasing a locking condition of a tool mechanism of a mobile machine tool in a tooling process or for preventing a malfunction of the mobile machine tool. Furthermore, the invention relates to a tool mechanism for performing such a method as well as a mobile machine tool having such a tool mechanism.

For example, screw fastening in interior finishing (SI) applications requires high-performance tools capable of delivering precise and efficient fastening operations. In conventional SI tools, the motor speed is controlled by the user through the trigger position. However, when using high-impact energy tools with large socket sizes (e.g., M20 and above), operational challenges frequently arise due to tolerances, wear, and insufficient lubrication of the socket. These factors often result in a locking condition between the socket and the nut, leading to several critical issues.

The locking condition not only overstresses the tool's impact mechanism, and thereby reducing its overall lifespan, but also significantly slows down the screwing process. Furthermore, it can prevent the target tension in the screw from being accurately achieved, impacting the quality and reliability of the fastening. Once the fastening operation is complete, the user may face additional difficulties in removing the tool from the nut, often requiring extra movements or reversing the trigger to disengage the socket. These inefficiencies contribute to productivity loss and increased wear on both the tool and the fasteners.

It is thus an object of the present invention to provide an improved machine tool, especially a machine tool having an improved tool performance and/or an extended service life of impact mechanisms and/or an improved operational efficiency and/or a reduced downtime.

### DISCLOSURE OF THE INVENTION

Accordingly, a method for detecting and releasing a locking condition of a tool mechanism of a mobile machine tool in a tooling process or for preventing a malfunction of the mobile machine tool is suggested, the tool mechanism having a tool, a socket and an electric motor for driving the tool. The method comprising the steps of: estimating a socket condition based on an operating parameter of the mobile machine tool; detecting if a locking condition of the socket is present or if a socket inconformity condition for the mobile machine tool is fulfilled based on the estimated socket condition; and if the locking condition is detected, for unlocking the socket, reversing a direction of rotation of the electric motor or follow a position trajectory, e.g. an oscillation, according to a release criterion, or, if the socket inconformity condition is detected, stopping the electric motor for preventing the malfunction of the mobile machine tool.

In the present invention, the term "tool mechanism" may also be understood as a "striking mechanism" or a "hammer mechanism". The tool may be a hammer or a striker. The socket may also be understood as a tool holder. The tooling process may include a screwing process or a hammering process or a sawing process or any other kind of tooling process.

The present invention introduces, for example, an improved screw fastening system that optimizes the fastening process while preventing socket-nut locking conditions. The proposed solution thereby enhances tool performance, extends the service life of impact mechanisms, and improves overall operational efficiency, reducing unnecessary downtime and increasing productivity in SI applications.

According to a further embodiment, there is suggested a tool mechanism of a mobile machine tool for detecting and releasing a locking condition of the tool mechanism in a tooling process or for preventing a malfunction of the mobile machine tool, the tool mechanism having a tool, a socket and an electric motor for driving the tool and a control unit for: estimating a socket condition based on an operating parameter of the mobile machine tool; detecting if a locking condition of the socket is present or if a socket inconformity condition for the mobile machine tool is fulfilled based on the estimated socket condition; and if the locking condition is detected, for unlocking the socket, reversing a direction of rotation of the electric motor or follow a position trajectory according to a release criterion, or, if the socket inconformity condition is detected, stopping the electric motor for preventing the malfunction of the mobile machine tool.

By continuously monitoring operational parameters such as motor speed, tool speed, impact force, electric motor current, and/or acoustic signals, the method can detect abnormal conditions indicative of socket locking or tool malfunction. This proactive detection minimizes excessive stress on the impact mechanism, thereby extending the tool's lifespan and reducing maintenance needs. The method ensures that fastening operations proceed efficiently by preventing delays caused by locking conditions, improving productivity in industrial and construction settings. Furthermore, by analyzing the for example measured inertia, stiffness, and/or mass of the tool mechanism in relation to the estimated socket condition, the system enables a more precise identification of inconsistencies, leading to an adaptive response that optimizes tool performance. When a locking condition is detected, the method can trigger corrective actions such as controlled reverse rotation of the electric motor for a predetermined time, number of impacts, or until the locking condition is resolved. This automated response eliminates the need for manual intervention, reducing operator fatigue and ensuring consistent fastening quality. Additionally, by dynamically adjusting impact parameters based on real-time conditions, the system prevents excessive torque fluctuations, ensuring the target tension in the screw is accurately achieved. The ability to adapt to different socket conditions and mitigate mechanical inconsistencies enhances the overall reliability of the tool, making it more robust in demanding environments.

Another aspect of the present invention relates to a mobile machine tool, especially a mobile machine tool having a tool mechanism of a mobile machine tool for detecting and releasing a locking condition of the tool mechanism in a tooling process or for preventing a malfunction of the mobile machine tool.

The mobile machine tool may be a handheld electric machine or a hand machine tool, such as a drill machine, a power screw driver, a power chisel, a power sander, a power saw, or the like. Also, it is conceivable that the mobile machine tool is or includes a construction robot. The mobile machine tool may have a manipulator, preferably a multi-axis manipulator. The mobile machine tool may have a driving device for driving the tool, such as driving a drill, a chisel, a vacuum cleaner, or the like.

The mobile machine may be configured for machining stone, such as concrete, and/or metal, and/or wood, for example. It may be prepared for drilling, chiseling, sawing, and/or sanding.

Generically speaking, the mobile machine tool may be configured for executing tasks in building construction and/or underground engineering. Conceivably, it may be that the mobile machine is not suitable for mining.

The mobile machine tool may be portable; for example, it may weigh less than 50 kg and preferably less than 25 kg.

In another aspect, the release criterion includes reversing the direction of rotation of the electric motor or follow a position trajectory for a predetermined period of time or for a given number of impacts or until the locking condition is removed.

The release criterion preferably involves reversing the direction of rotation of the electric motor or follow a position trajectory, allowing the tool to disengage from the locked condition. This reversal is preferably executed for a predetermined period of time, for a controlled and systematic attempt to release the locking condition without excessive wear on the tool components. Alternatively, the reversal may be performed for a given number of impacts, which preferably aligns with the mechanical characteristics of the fastening process. In another implementation, the reversal continues until the locking condition is removed, preferably ensuring that the tool dynamically adapts to different levels of resistance and socket inconformity. The technical advantages of this approach include reducing manual intervention, minimizing downtime due to locking conditions, and extending the lifespan of the tool by preventing excessive stress on the tool mechanism. A locking condition preferably refers to a state in which the socket and nut become temporarily fixed together due to mechanical factors such as wear, insufficient lubrication, and/or excessive torque.

In yet another aspect, the estimating the socket condition based on the operating parameter of the mobile machine tool includes estimating the socket condition based on a motor speed of the electric motor and/or based on a tool speed of the tool and/or based on an accelerometer output on a mobile machine tool housing and/or based on an accelerometer output of a microphone of the mobile machine tool and/or based on a current of the electric motor and/or based on a power of the electric motor.

Motor speed of the electric motor is preferably used as an indicator, as variations in speed can signal resistance changes in the fastening process. Tool speed of the tool is preferably monitored to detect deviations in impact frequency that may indicate a misalignment or locking condition. An accelerometer output on the mobile machine tool housing is preferably utilized to capture vibration patterns, which can reveal inconsistencies in socket engagement. Additionally or alternatively, an accelerometer output of a microphone of the mobile machine tool is preferably analyzed to detect acoustic anomalies related to mechanical stress or impact irregularities. The current of the electric motor is preferably measured to assess torque demand and detect unusual power consumption patterns that could signify a socket issue. Similarly, the power of the electric motor is preferably evaluated to determine whether excessive energy is being used due to increased resistance in the fastening process. This presents an enhanced detection accuracy, real-time adaptation to different socket conditions, and improved overall tool efficiency. An accelerometer preferably refers to a sensor that measures acceleration forces, which can be used to detect movement, vibration, and impact characteristics in mechanical systems.

In yet another aspect, the tool speed is measured by a speed measurement sensor of the tool mechanism.

Tool speed is preferably measured by a speed measurement sensor of the tool mechanism. The speed measurement sensor preferably detects the rotational or linear velocity of the tool, allowing for real-time adjustments based on detected variations. The tool mechanism is preferably a component of the mobile machine tool responsible for generating the impact force necessary for fastening operations, preferably driven by an electric motor. By continuously measuring the tool speed, the system preferably prevents performance degradation and identifies potential malfunctions such as irregular impact patterns or socket locking conditions.

In yet another aspect, the speed measurement sensor is a tool angle sensor.

The speed measurement sensor is preferably a tool angle sensor, allowing for indirect speed determination based on angular displacement over time. A tool angle sensor preferably measures the rotation or oscillation of the tool mechanism, providing a calculation of speed by analyzing position changes in successive time intervals. The tool angle sensor is preferably integrated within the tool housing or directly on the tool mechanism for continuous and accurate data collection. By using a tool angle sensor, the system preferably benefits from non-contact or low-wear measurement techniques. Additionally, monitoring the tool angle preferably enables the detection of operational anomalies such as variations in impact energy, misalignment, or mechanical wear.

In yet another aspect, the socket condition is estimated based on a ratio between the tool speed measured before and after an impact that is causing the locking condition.

The ratio between the tool speed measured before and after an impact that is causing the locking condition is preferably used as a diagnostic parameter to detect fastening anomalies. The tool speed is preferably measured immediately before the impact to establish a reference velocity, ensuring a baseline for comparison. After the impact, the tool speed is preferably measured again to determine the effect of the impact on the tool's movement. The ratio between these two values preferably indicates whether the impact has resulted in an unintended locking condition, with a significant reduction in speed indicating increased resistance or mechanical jamming.

In yet another aspect, the socket condition is estimated based on a statistical analysis of the motor speed.

The motor speed is preferably recorded over multiple fastening cycles, allowing for a dataset to be analyzed. By applying statistical methods, such as mean value calculations, standard deviation analysis, and/or trend detection, the method preferably identifies patterns that may indicate a likelihood of socket locking conditions. This analysis is preferably performed in real-time. Additionally, deviations in statistical parameters preferably serve as predictive indicators for maintenance, allowing users to intervene before a critical failure occurs. This improves the tool's lifespan.

In yet another aspect, after reversing the direction of rotation of the electric motor or follow a position trajectory according to the release criterion, the method further comprises changing the direction of rotation of the electric motor or follow a position trajectory for continuing the tooling process.

Changing the direction of rotation of the electric motor or follow a position trajectory for continuing the tooling process is preferably implemented to overcome to release a locking condition. The change in rotation direction is preferably executed automatically. The electric motor is preferably controlled by an integrated system that dynamically adjusts its rotation based on real-time operational parameters. By reversing the rotation temporarily or adjusting rotational sequences, the tool preferably ensures that the fastening process continues without interruption. This function is preferably applied in both forward and reverse tooling operations, depending on the detected fastening state. This provides increased reliability in overcoming fastening obstacles, prevention of tool stalling due to excessive resistance, and reduced manual intervention by the user.

In yet another aspect, the tooling process is continued according to a tool trigger applied by a user of the mobile machine tool.

The tooling process is preferably continued according to a tool trigger applied by a user of the mobile machine tool. The tool trigger is preferably an input mechanism, such as a variable-speed trigger or a digital control switch, that allows the user to regulate the motor's speed and direction. The continuation of the tooling process is preferably dependent on the user maintaining or modifying trigger pressure. This implementation preferably provides an intuitive and responsive control system, enabling the user to adjust tooling force dynamically based on material resistance or task requirements. The interaction between the trigger and the motor control system is preferably optimized to prevent unintended interruptions and to enhance user handling efficiency.

In yet another aspect, the locking condition is detected based on a socket angle of the socket, a motor speed of the electric motor and a ripple of the motor speed.

The socket angle is preferably determined by measuring the rotational position of the socket relative to the tool axis, allowing the system to detect whether the socket movement is restricted. A constant or abnormally low socket angle preferably indicates that the socket is not rotating freely, suggesting a potential locking condition. The motor speed of the electric motor is preferably monitored in real-time to detect sudden reductions in speed, which may signal increased resistance due to mechanical binding. A decrease in motor speed preferably correlates with excessive torque buildup, another preferred precursor to socket locking. The ripple of the motor speed is preferably analyzed to detect fluctuations in rotational velocity, with an increase in ripple suggesting irregular resistance patterns or variations in torque demand. The combined analysis of these parameters preferably allows to differentiate between normal fastening conditions and a mechanical blockage, i.e., a locking condition.

In yet another aspect, the locking condition is detected when the socket angle keeps constant over a predetermined period of time, when the motor speed decreases over the predetermined period of time and when the ripple increases over the predetermined period of time.

The parameters of a socket angle remaining constant, a motor speed decrease, and a ripple increase are preferably used as key indicators of a locking condition, allowing for an automated response to prevent tool malfunction. A constant socket angle is preferably interpreted as a sign of restricted movement, indicating that the socket is not progressing in the fastening operation. This condition preferably results from excessive resistance, mechanical jamming, or insufficient lubrication. A motor speed decrease is preferably measured to detect torque overload, with a gradual or sudden reduction in speed suggesting an obstruction in the tooling process. This reduction preferably serves as a primary indicator of increased resistance between the fastener and the material. A ripple increase in the motor speed is preferably analyzed to identify irregular load variations, as torque fluctuations typically intensify when the tool encounters resistance. The combined occurrence of these three conditions preferably triggers an automated corrective action, such as reversing the motor or adjusting impact force, to prevent further mechanical stress.

In yet another aspect, the socket inconformity condition is further detected based on a function of inertia, stiffness and mass of the tool mechanism.

A socket inconformity condition is preferably derived based on a function of inertia, stiffness, and mass of the tool mechanism. Inertia is preferably analyzed as a measure of the tool mechanism's resistance to changes in motion, allowing for the identification of abnormalities in impact energy transmission. Stiffness is preferably determined as the mechanical property defining the ability of the tool mechanism to resist deformation under force. The mass of the tool mechanism is preferably considered to account for its contribution to impact dynamics. By evaluating these parameters in combination, the method preferably establishes a functional relationship that enables the detection of socket-related inconsistencies, such as excessive resistance or improper fastening conditions.

In yet another aspect, the inertia, stiffness and mass of the tool mechanism is indirectly derived based on the estimated socket condition.

A socket condition is preferably indirectly derived based on the estimated socket condition, ensuring that the system identifies fastening inconsistencies without requiring direct physical measurement. The socket condition is preferably inferred from operational parameters such as motor speed, impact force, and vibration characteristics, enabling a non-intrusive assessment of fastening quality. By analyzing these parameters, the method preferably establishes correlations between tool behavior and potential socket irregularities, allowing for detection of misalignments, wear, and/or locking conditions.

According to an aspect of the invention, a computer program product is suggested, which comprises instructions which, when the program is executed by a computer, cause the computer to carry out the above method. As the computer program product has the features of the above method, it realizes the method's advantages.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

The embodiments and features of the suggested method mutually apply to the suggested machine tool.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

### BRIEF DESCRIPTION OF THE FIGURES

Further embodiments, features and advantages of the present invention will become apparent from the subsequent description and dependent claims, taken in conjunction with the accompanying drawings, in which:
- Fig. 1: a schematic view of an embodiment of a mobile machine tool;

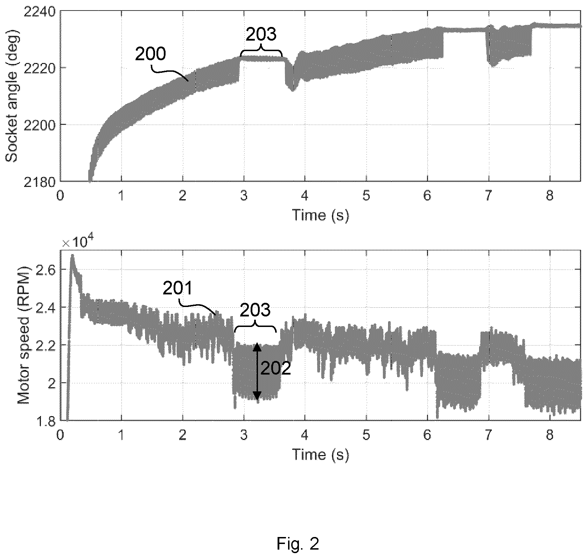

- Fig. 2: a schematic view of a diagram showing locking of a socket; and
- Fig. 3: a schematic flow chart showing an embodiment of the presented method.

In the Figures, like reference numerals designate like or functionally equivalent elements, unless otherwise indicated.

### EMBODIMENTS OF THE INVENTION

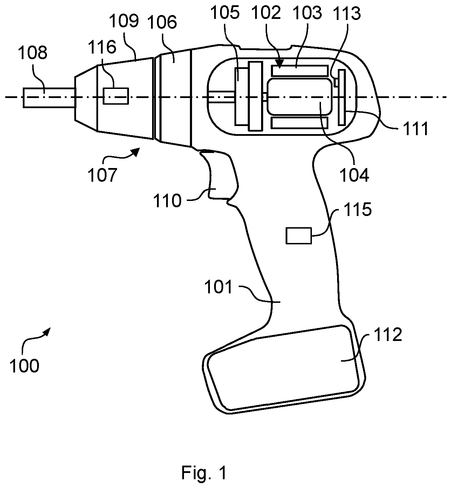

Fig. 1 shows a mobile machine tool 100. The machine tool 100 is, for example, a hand machine tool, or more precisely a power drill. Further preferred embodiments comprise a power chisel, a power sander, or a power saw. The machine tool 100 has a housing 101 for protecting and bearing further parts. The machine tool 100 is embodied as a portable machine. It may have, for example, a weight between 0.5 a 15 kg, or generically speaking, a weight lower than 25 kg or 50 kg.

The machine tool 100 has an electric motor 102, which has a stator 103 and a rotor 104. The rotor 104 may for example be rotationally coupled via a transmission 105 to a spindle 106 of a socket 107. The transmission 105 may be a gear reduction transmission. It may be that the transmission is shiftable between multiple gear ratios.

The socket 107 is preferably configured for holding a changeable tool 108. The tool 108 may be a striker or a hammer. For example, it may be that a chuck (not shown) of the socket 107 is opened and/or closed by rotating a handle 109 of the socket 107 in relation to the spindle 106. For example, it may be a quick-release chuck, a SDS type chuck and/or a TE-C type chuck. By means of the socket 107, the tool 108 may be drivable in a rotating, striking, and/or hammering way.

The electric motor 102 may for example be a brushless DC motor. The electric motor 102 may be drivable to generate a torque between the stator 103 and the rotor 104. A control device 111 may configured to switch an electrical current flow from a current source 112 to the stator 103 in response to an operation to an operating element 110. The current source 112 may preferably be an accumulator or a circuit of multiple accumulators, but it may also be a mains supply adaptor.

The control device 111 may for example be configured to detect a rotational position (rotational angle and/or rotational angle speed) of the rotor 104 in relation to the housing 101 by means of a hall sensor circuit 113. Further, the control device 111 may for example be configured to supply electric current to windings (not shown) of the stator 103. For this purpose, the control device 111 may for example have an evaluation logic, and it may for example be configured for executing a computer program, the instructions of which cause the control device 111 to execute a method for operating the mobile machine tool 100.

As presented, the control device 111 is also configured for detecting and releasing a locking condition of a tool mechanism 114 of the mobile machine tool 100 in a tooling process or for preventing a malfunction of the mobile machine tool 100 due to an improper socket usage. The tool mechanism 114 having the tool 108, the socket 107 and the electric motor 102 for driving the tool 108.

The control device 111 is configured for estimating a socket condition of the socket 107 based on an operating parameter of the mobile machine tool 100. The operating parameter of the mobile machine tool 100 includes estimating the socket condition based on a motor speed of the electric motor 102 and/or based on a tool speed of the tool 108 and/or based on an accelerometer output on the housing 101 and/or based on an accelerometer output of a microphone 115 of the mobile machine tool 100 and/or based on a current of the electric motor 102 and/or based on a power of the electric motor 102. The tool speed may be measured by a speed measurement sensor 116 of the tool mechanism 114. The speed measurement sensor 116 may be a tool angle sensor. The socket condition may be estimated based on a ratio between the tool speed measured before and after an impact that is causing the locking condition. Also, the socket condition may be estimated based on a statistical analysis of the motor speed of the electric motor 102.

The control device 111 is further configured for detecting if a locking condition of the socket 107 is present or if a socket inconformity condition for the mobile machine tool 100 is fulfilled based on the estimated socket condition.

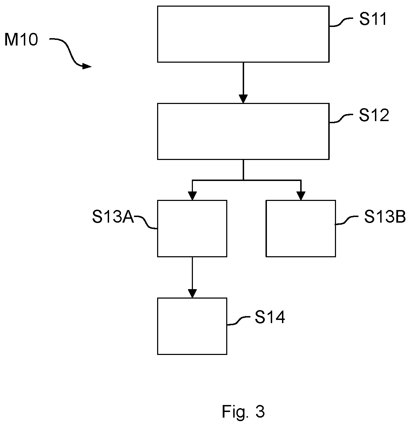

The control device 111 is further configured, if the locking condition is detected, for unlocking the socket 107, reversing a direction of rotation of the electric motor 102 or follow a position trajectory according to a release criterion. The release criterion may include reversing the direction of rotation of the electric motor 102 or follow a position trajectory for a predetermined period of time or for a given number of impacts or until the locking condition is removed. The locking condition may be detected based on a socket angle 200 of the socket 107, a motor speed 201 of the electric motor 102 and a ripple 202 of the motor speed, as this is shown in the diagram of Fig. 3. Thereby, the locking condition is detected when the socket angle 200 keeps constant over a predetermined period of time 203, when the motor speed 201 decreases over the predetermined period of time 203 and when the ripple 202 increases over the predetermined period of time 203.

Alternatively, the control device 111 is configured, if the socket inconformity condition is detected, for at least temporarily stopping the electric motor 102 for preventing the malfunction of the mobile machine tool 100. Thereby, the socket inconformity condition is further detected based on a function of inertia, stiffness and mass of the tool mechanism, wherein the inertia, stiffness and mass of the tool mechanism 114 is preferably indirectly derived based on the estimated socket condition.

In Fig. 3, there is shown a schematic flow chart showing an embodiment of the presented method M10. The method M10 is configured for detecting and releasing a locking condition of the tool mechanism 114 of the mobile machine tool 100 in a tooling process or for preventing a malfunction of the mobile machine tool 100.

In a step S11, the method comprises estimating a socket condition based on an operating parameter of the mobile machine tool 100.

In a step S12, the method comprises detecting if a locking condition of the socket 107 is present or if a socket inconformity condition for the mobile machine tool 100 is fulfilled based on the estimated socket condition.

In a step S13, the method comprises, if the locking condition is detected, for unlocking the socket 107, reversing a direction of rotation of the electric motor 102 or follow a position trajectory according to a release criterion, or, if the socket inconformity condition is detected, stopping the electric motor 102 for preventing the malfunction of the mobile machine tool 100.

In an optional step S14, the method may further comprise, after reversing the direction of rotation of the electric motor 102 or follow a position trajectory according to the release criterion, changing the direction again to an initial driving / tooling direction of rotation of the electric motor 102 or follow a position trajectory for continuing the tooling process. The tooling process may be continued according to a tool trigger applied by a user of the mobile machine tool 100 to the operating element 110.

Although the present invention has been described in accordance with preferred embodiments, it is obvious for the person skilled in the art that modifications are possible in all embodiments.

### REFERENCE SIGNS

- 100: mobile machine tool
- 101: housing
- 102: electric motor
- 103: stator
- 104: rotor
- 105: transmission
- 106: spindle
- 107: socket
- 108: tool
- 109: handle
- 110: operating element
- 111: control device
- 112: current source
- 113: hall sensor circuit
- 114: tool mechanism
- 115: microphone
- 116: speed measurement sensor

- M10: Method for detecting and releasing a locking condition or for preventing a malfunction
- S11: Estimating a socket condition
- S12: Detecting if a locking condition or a socket inconformity condition is present
- S13A: Reversing a direction
- S13B: Stopping the electric motor
- S14: Changing the direction again

## Claims

1. Method (M10) for detecting and releasing a locking condition of a tool mechanism (114) of a mobile machine tool (100) in a tooling process or for preventing a malfunction of the mobile machine tool (100), the tool mechanism (114) having a tool (108), a socket (107) and an electric motor (102) for driving the tool (108); the method (M10) comprising:
- estimating (S11) a socket condition based on an operating parameter of the mobile machine tool (100);
- detecting (S12) if a locking condition of the socket (107) is present or if a socket inconformity condition for the mobile machine tool (100) is fulfilled based on the estimated socket condition; and
- if the locking condition is detected, for unlocking the socket (107), reversing (S13A) a direction of rotation of the electric motor (102) or follow a position trajectory according to a release criterion, or, if the socket inconformity condition is detected, stopping (S13B) the electric motor (102) for preventing the malfunction of the mobile machine tool (100).

2. Method according to claim 1, wherein the release criterion includes reversing the direction of rotation of the electric motor (102) or follow a position trajectory for a predetermined period of time or for a given number of impacts or until the locking condition is removed.

3. Method according to claim 1 or 2, wherein estimating the socket condition based on the operating parameter of the mobile machine tool (100) includes estimating the socket condition based on a motor speed (201) of the electric motor (102) and/or based on a tool speed of the tool (108) and/or based on an accelerometer output on a mobile machine tool housing (101) and/or based on an accelerometer output of a microphone (115) of the mobile machine tool (100) and/or based on a current of the electric motor (102) and/or based on a power of the electric motor (102).

4. Method according to claim 3, wherein the tool speed is measured by a speed measurement sensor (116) of the tool mechanism (114).

5. Method according to claim 4, wherein the speed measurement sensor (116) is a tool angle sensor.

6. Method according to any of claims 3 to 5, wherein the socket condition is estimated based on a ratio between the tool speed or motor speed (201) measured before and after an impact that is causing the locking condition.

7. Method according to any of claims 3 to 6, wherein the socket condition is estimated based on a statistical analysis of the motor speed (201).

8. Method according to any of claims 1 to 7, wherein, after reversing (S13) the direction of rotation of the electric motor (102) or follow a position trajectory according to the release criterion, the method further comprises changing (S14) the direction of rotation of the electric motor (102) or follow a position trajectory for continuing the tooling process.

9. Method according to claim 8, wherein the tooling process is continued according to a tool trigger applied by a user of the mobile machine tool (100).

10. Method according to any of claims 1 to 9, wherein the locking condition is detected based on a socket angle (200) of the socket (107), a motor speed (201) of the electric motor (102) and a ripple (202) of the motor speed (201).

11. Method according to claim 10, wherein the locking condition is detected when the socket angle (200) keeps constant over a predetermined period of time (203), when the motor speed (201) decreases over the predetermined period of time (203) and when the ripple (202) increases over the predetermined period of time (203).

12. Method according to any of claims 1 to 11, wherein the socket inconformity condition is further detected based on a function of inertia, stiffness and mass of the tool mechanism (114).

13. Method according to claim 12, wherein the inertia, stiffness and mass of the tool mechanism (114) is indirectly derived based on the estimated socket condition.

14. Tool mechanism (114) for a mobile machine tool (100) for detecting and releasing a locking condition of the tool mechanism (114) in a tooling process or for preventing a malfunction of the mobile machine tool (100), the tool mechanism (114) having a tool (108), a socket (107) and an electric motor (102) for driving the tool (108) and a control unit (111) for:
- estimating a socket condition based on an operating parameter of the mobile machine tool (100);
- detecting if a locking condition of the socket (107) is present or if a socket inconformity condition for the mobile machine tool (100) is fulfilled based on the estimated socket condition; and
- if the locking condition is detected, for unlocking the socket (107), reversing a direction of rotation of the electric motor (102) or follow a position trajectory according to a release criterion, or, if the socket inconformity condition is detected, stopping the electric motor (102) for preventing the malfunction of the mobile machine tool (100).

15. A mobile machine tool (100), having a tool mechanism (114) according to claim 14.
